# EUROPEAN PATENT APPLICATION

(11) **EP 4 518 338 A1**
(43) Date of publication of application: **05.03.2025**
(21) Application number: 23796075.2
(22) Date of filing: 10.04.2023
(51) Int. Cl.: H04N 23/60, G06T 7/215, G06V 10/26, H04N 23/54, H04N 25/47

(54) **DATA GENERATION DEVICE, DATA GENERATION METHOD, PROGRAM, AND ANALYSIS DEVICE**

(30) Priority: 26.04.2022 JP 2022072585
(71) Applicant: Sony Group Corporation, Tokyo 108-0075 (JP)
(72) Inventor: SATO, Hidehito, Tokyo 108-0075 (JP); TAKATSUKA, Susumu, Tokyo 108-0075 (JP); TETSUKAWA, Hiroki, Tokyo 108-0075 (JP)
(74) Representative: MFG Patentanwälte Meyer-Wildhagen Meggle-Freund Gerhard PartG mbB
(86) International application number: PCT/JP2023/014589
(87) International publication number: WO 2023/210330

(57) **Abstract**

A data generation apparatus includes a subcluster formation section that forms a subcluster by classifying, according to a specified condition, events detected by a vision sensor including two-dimensionally arranged pixels, the events occurring on the basis of an intensity of incident light to be asynchronously detected in the respective pixels; and a data generator that generates information regarding the subcluster on the basis of pieces of information regarding the events classified into the subcluster.

## Description

### Technical Field

The present technology relates to a data generation apparatus, a data generation method, a program, and analysis apparatus, and in particular, to a technology that uses a vision sensor.

### Background Art

An asynchronous vision sensor (a solid-state imaging device) has been proposed that detects, in real time, an event indicating that an amount of incident light exceeds a specified threshold in each of pixels arranged in a two-dimensional grid (for example, Patent Literature 1). The vision sensor detecting an event for each pixel as described above is called a dynamic vision sensor (DVS) or an event-based vision sensor (EVS).

### Citation List

### Patent Literature

Patent Literature 1: WO 2019/087471

### Disclosure of Invention

### Technical Problem

In the vision sensor described above, the number of events detected is increased as an object image becomes larger. Thus,the use of the vision sensor in an apparatus may result in a huge amount of data due to all of the pieces of information regarding detected events being recorded.

Thus, it is an object of the present technology to reduce an amount of data when a vision sensor is used.

### Solution to Problem

A data generation apparatus according to the present technology includes a subcluster formation section that forms a subcluster by classifying, according to a specified condition, events detected by a vision sensor including two-dimensionally arranged pixels, the events occurring on the basis of an intensity of incident light to be asynchronously detected in the respective pixels; and a data generator that generates information regarding the subcluster on the basis of pieces of information regarding the events classified into the subcluster.

This enables the data generation apparatus to only record information regarding a subcluster without having to record all of the event signals of events detected by the vison sensor.

### Brief Description of Drawings

[Fig. 1] Fig. 1 is a diagram used to describe a configuration of a measurement system.
[Fig. 2] Fig. 2 is a diagram used to describe a configuration of a data generation apparatus.
[Fig. 3] Fig. 3 is a diagram used to describe a configuration of a vision sensor.
[Fig. 4] Fig. 4 is a diagram used to describe an overview of an event signal that is output from the vision sensor.
[Fig. 5] Fig. 5 is a diagram used to describe a captured image based on event signals.
[Fig. 6] Fig. 6 is a diagram used to describe an event in a captured image.
[Fig. 7] Fig. 7 is a diagram used to describe subcluster formation processing.
[Fig. 8] Fig. 8 is a diagram used to describe the subcluster formation processing.
[Fig. 9] Fig. 9 is a diagram used to describe the subcluster formation processing.
[Fig. 10] Fig. 10 is a diagram used to describe the subcluster formation processing.
[Fig. 11] Fig. 11 is a diagram used to describe the subcluster formation processing.
[Fig. 12] Fig. 12 is a diagram used to describe the subcluster formation processing.
[Fig. 13] Fig. 13 is a diagram used to describe an example of a data structure of a subcluster.
[Fig. 14] Fig. 14 is a diagram used to describe an example of a data structure of a subcluster.
[Fig. 15] Fig. 15 is a flowchart indicating a flow of the subcluster formation processing.
[Fig. 16] Fig. 16 is a diagram used to describe a configuration of an analysis apparatus.
[Fig. 17] Fig. 17 is a flowchart indicating a flow of analysis processing.
[Fig. 18] Fig. 18 is a diagram used to describe a configuration of the data generation apparatus according to a modification.

### Mode(s) for Carrying Out the Invention

Embodiments are described below in the following order.
<1. Configuration of Measurement System 1>
<2. Configuration of Image-Capturing Apparatus 2>
<3. Data Compression Processing>
<4. Configuration of Analysis Apparatus 3>
<5. Analysis Processing>
<6. Other Examples of Configuration of Data Generation System>
<7. Summary of Embodiments>
<8. Present Technology>

### <1. Configuration of Measurement System 1>

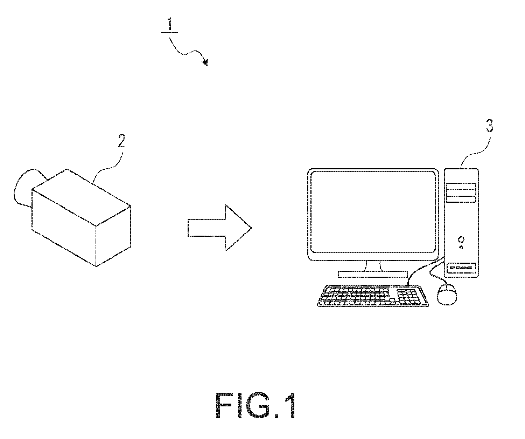

First, a configuration of a measurement system 1 of an embodiment according to the present technology is described. Fig. 1 is a diagram used to describe the configuration of the measurement system 1. As illustrated in Fig. 1, the measurement system 1 includes an image-capturing apparatus 2 and an analysis apparatus 3.

As described in detail later, the image-capturing apparatus 2 detects an event based on a change in intensity using a vision sensor 13. Further, on the basis of information (an event signal) regarding the detected event, the image-capturing apparatus 2 generates, as subcluster data, information regarding a subcluster that corresponds to a portion of an object.

Here, it is conceivable that the image-capturing apparatus 2 could capture images of various objects. For example, the image-capturing apparatus 2 is arranged in water and captures an image of an object that is situated in water. Examples of a target object include a living creature and a non-living material that are situated in water. Examples of a target living creature include a phytoplankton and a zooplankton that are situated in water, as well as a microorganism in water such as a larva of an underwater life. Further, examples of a target non-living material include microplastics, dust, sand, marine snow, and air bubbles.

Thus, an example in which the image-capturing apparatus 2 is arranged in water and captures an image of an object that is situated in water is described below. Note that the image-capturing apparatus 2 may be situated at a location, such as on load, that is other than underwater, and may capture an image of an object that is situated on land. In other words, any object may be an image-capturing target.

The analysis apparatus 3 receives subcluster data from the image-capturing apparatus 2, and generates (calculates) information regarding an object of which an image is captured (such as a feature amount of the object, the type of object, and the number of objects for each type that are described later) on the basis of the received subcluster data.

### <2. Configuration of Image-Capturing Apparatus 2>

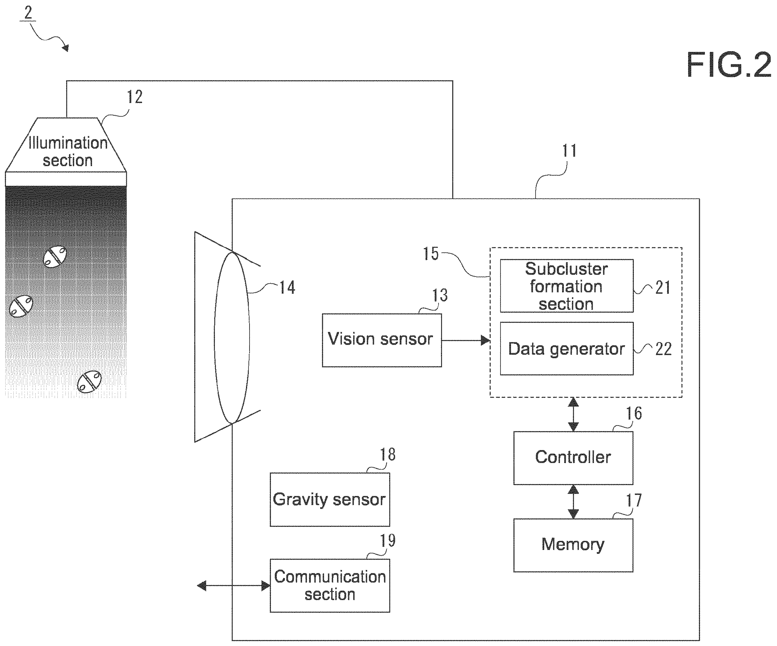

Fig. 2 is a diagram used to describe a configuration of the image-capturing apparatus 2. As illustrated in Fig. 2, the image-capturing apparatus 2 includes a body 11 and an illumination section 12. Note that the illumination section 12 may be provided within the body 11.

The body 11 includes a vision sensor 13, a lens 14, a signal analyzer 15, a controller 16, a memory 17, a gravity sensor 18, and a communication section 19. Note that, for example, a diffraction grating, a zone plate, a mask film, or a three-dimensional scatterer may be used instead of the lens 14.

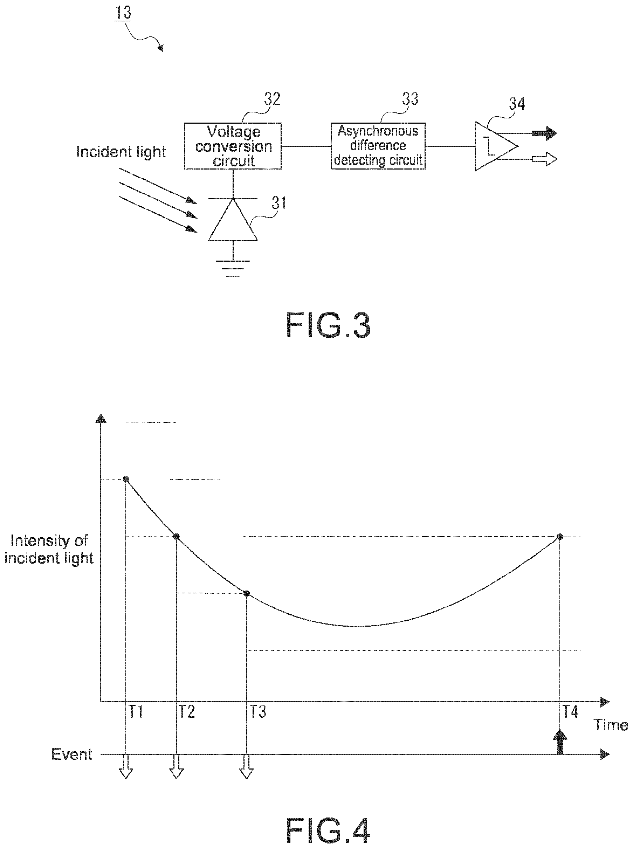

Fig. 3 is a diagram used to describe a configuration of the vision sensor 13. Fig. 4 is a diagram used to describe an overview of an event signal that is output from the vision sensor 13.

The vision sensor 13 is a sensor called a dynamic vision sensor (DVS) or an event-based vision sensor (EVS). The vision sensor 13 detects an event that occurs in a specified imaging range. The event occurs according to a change in the intensity of incident light, and, for example, the event indicates that a value corresponding to a change in the intensity of incident light exceeds a threshold.

As illustrated in Fig. 3, the vision sensor 13 includes a plurality of pixels arranged in a two-dimensional square grid, each of the plurality of pixels including a photodiode 31, a voltage conversion circuit 32, an asynchronous difference detecting circuit 33, and a comparator 34. When incident light is irradiated onto the photodiode 31, the photodiode 31 generates current proportional to the intensity of incident light due to photoelectric effects. The voltage conversion circuit 32 converts the current generated by the photodiode 31 into voltage. The asynchronous difference detecting circuit 33 detects a difference between the voltage obtained by the conversion performed by the voltage conversion circuit 32 and a reference voltage.

The comparator 34 outputs an event signal (indicated using a black arrow in the figure) indicating that a positive event occurs when a difference in voltage exceeds a positive threshold. Further, the comparator 34 outputs an event signal (indicated using a white arrow in the figure) indicating that a negative event occurs when the difference in voltage falls below a negative threshold.

Note that the event signal includes, as information regarding a detected event, information regarding, for example, coordinates (x,y) of a pixel in which the event is detected, a time at which the event is detected, and whether the event is positive or negative. Further, the positive threshold and the negative threshold are normally respectively set to specified values determined in advance. However, the positive threshold and the negative threshold can be changed according to the case.

For example, it is assumed that a negative event signal is output at a time T1, as illustrated in Fig. 4. Here, a voltage corresponding to a current intensity is set to be a reference voltage. Then, a line (indicated by a dot-dash line in the figure) that corresponds to a positive threshold is set on a positive side relative to the reference voltage, and a line (indicated by a dashed line in the figure) that corresponds to a negative threshold is set on a negative side relative to the reference voltage.

Thereafter, when there is a reduction in the intensity of incident light and the voltage falls below the line corresponding to the negative threshold at a time T2, the vision sensor 13 outputs a negative event signal. At this point, the reference voltage is set, and lines that respectively correspond to a positive threshold and a negative threshold are set, as in the case of the time T1.

Further, when there is a reduction in the intensity of incident light and the voltage falls below the line corresponding to the negative threshold at a time T3, the vision sensor 13 outputs a negative event signal. At this point, the reference voltage is set, and lines that respectively correspond to a positive threshold and a negative threshold are set, as in the case of the time T1.

Thereafter, when there is an increase in the intensity of incident light and the voltage exceeds the line corresponding to the positive threshold at a time T4, the vision sensor 13 outputs a positive event signal.

As described above, the vision sensor 13 is an asynchronous image sensor that detects an event for each pixel in real time.

The vision sensor 13 performs an operation of reading an event signal for a pixel in which the occurrence of an event has been detected. Thus, the vision sensor 13 can perform reading at a very high speed, compared to a synchronous image sensor that performs the read operation with respect to all of pixels at a specified frame rate, and also makes it possible to reduce power consumption.

The signal analyzer 15 includes, for example, a microcomputer that includes a central processing unit (CPU), a read only memory (ROM), and a random access memory (RAM).

In the present embodiment, the signal analyzer 15 serves as a subcluster formation section 21 and a data generator 22, as illustrated in Fig. 2.

According to a specified condition, the subcluster formation section 21 classifies events detected by the vision sensor 13 to form a subcluster.

The data generator 22 generates information regarding a subcluster on the basis of event signals of events classified into the subcluster.

Note that the subcluster formation section 21 and the data generator 22 will be described in detail later.

Here, the "subcluster" is formed by a plurality of events detected by the vision sensor 13 being classified according to a specified condition.

Further, the "cluster" is formed by subclusters based on a single object being associated with each other. Thus, a cluster can be formed for each object of which an image is captured using the vision sensor 13.

Note that a single cluster may be formed only by a single subcluster.

The controller 16 includes, for example, a microcomputer that includes a CPU, a ROM, and a RAM, and performs an overall control on the image-capturing apparatus 2. Further, the controller 16 performs processing of reading data recorded in the memory 17, processing of recording data in the memory 17, and transmission and reception of various data to and from an external apparatus through the communication section 19. Note that the signal analyzer 15 and the controller 16 may be the same hardware.

The memory 17 is a recording medium such as a nonvolatile memory. The memory 17 may be removable from the image-capturing apparatus 2.

The gravity sensor 18 detects a gravitational acceleration (a gravity direction), and outputs a result of the detection to the controller 16.

The communication section 19 performs data communication with an external apparatus wirelessly or by wire.

Note that the image-capturing apparatus 2 may include none of the gravity sensor 18 and the communication section 19, or does not necessarily have to include one of the gravity sensor 18 and the communication section 19.

The illumination section 12 irradiates light onto an imaging range of the vision sensor 13. The illumination section 12 can perform irradiation while switching between pieces of light of different wavelengths, and, for example, the illumination section 12 irradiates a piece of light of a different wavelength for every 10 nm. Note that the image-capturing apparatus 2 does not necessarily have to include the illumination section 12 depending on the condition of, for example, ambient light.

### <3. Data Compression Processing>

Next, data compression processing performed by the signal analyzer 15 is described. The data compression processing includes denoising processing, subcluster formation processing, and data generation processing that are described below.

### [3.1. Denoising Processing]

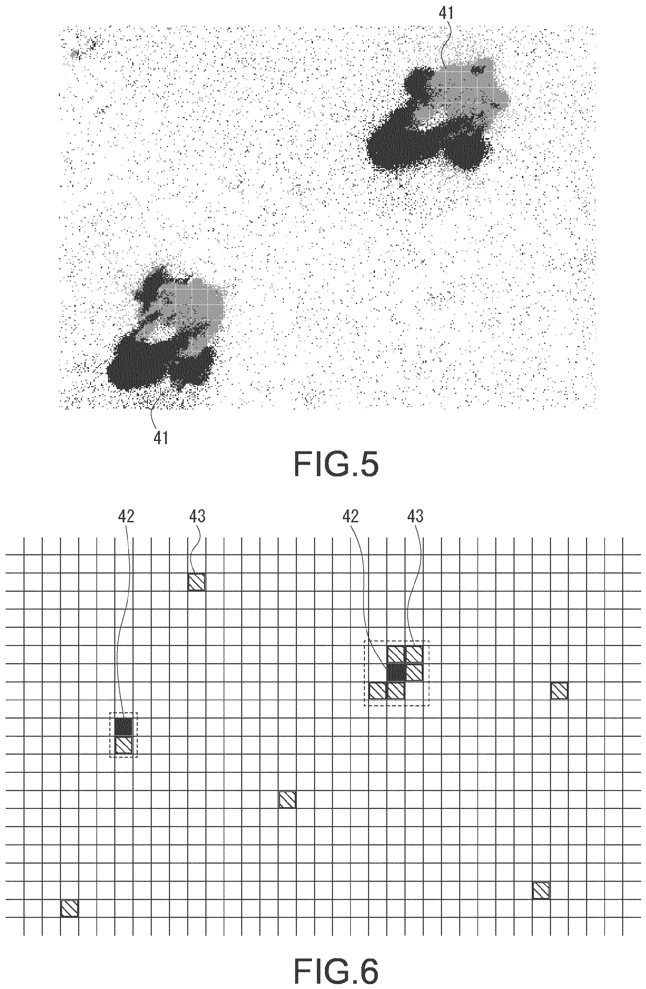

Fig. 5 is a diagram used to describe a captured image based on event signals. Fig. 6 is a diagram used to describe an event in a captured image. Note that pixels of a captured image are represented by a plurality of grid cells in Fig. 6.

The vision sensor 13 performs an operation of reading an event signal for a pixel in which an event has been detected. Thus, as illustrated in Fig. 5, a group of points of events (hereinafter referred to as an event-point group 41) based on a single object (more particularly, a movement of the object) collectively appears in a captured image of a frame when the captured image is generated on the basis of event signals acquired for a specified period of time. On the other hand, a large number of events corresponding to noise also appear in the image in addition to the event-point group 4.

Thus, first, the subcluster formation section 21 removes an event that is not an event (a valid event) based on an object, that is, an event that corresponds to noise.

Specifically, as illustrated in Fig. 6, the subcluster formation section 21 determines whether a specified number of events 43 (hatched in the figure) are situated around an event 42 (indicated in black in the figure) based on an event signal acquired for, for example, a most recent period of one millisecond, the event 43 being an event based on an event signal acquired for, for example, a period of three milliseconds that is before the most recent period of one millisecond. Here, the specified number is set to a value with which it can be determined whether the event 42 is noise or a portion of the event-point group 41.

Then, when it has been determined that the events 43 of which the number is larger than or equal to the specified number are situated around the event 42, the subcluster formation section 21 determines that the event 42 is a portion of the event-point group 41 and is a valid event.

On the other hand, when it has been determined that the events 43 of which the number is smaller than the specified number are situated around the event 42, the subcluster formation section 21 determines that the event 42 is not a portion of the event-point group 41 and is an invalid event, that is, noise.

As described above, the subcluster formation section 21 removes noise from the events 42 based on event signals acquired from the vision sensor 13 for each specified period of time (such as for each period of one millisecond), and only sets a valid event as a target for processing performed later.

### [3.2. Subcluster Formation Processing]

Here, when all of the event signals (all of the pieces of information regarding events) are recorded for the event-point group 41 based on a signal object, there will be an increase in data amount in proportion to the square of dimensions of the object in an image-capturing plane.

For example, it is assumed that, when an object appears in a range in which there are dozens of pixels in the horizontal direction (a lateral direction) and in the vertical direction (a longitudinal direction), there will be about ten thousand event signals based on the object. In such a case, when an object appears in a range in which there are several hundred pixels in the horizontal direction and in the vertical direction, there will be about one million event signals.

When all of the event signals are recorded, the data amount may become huge depending on the size of an object in an image-capturing plane, as described above. Further, when a large amount of data (a large number of event points) results in a large amount of calculation performed when data is to be used afterward. This also results in an increase in processing burdens.

Thus, in the present embodiment, events determined by denoising to be valid are classified into a subcluster. Information regarding the subcluster is generated as subcluster data on the basis of event signals of the events classified into the subcluster, and the generated information is recorded. This makes it possible to reduce the data amount and to reduce processing burdens imposed later, compared to when an event signal itself is recorded.

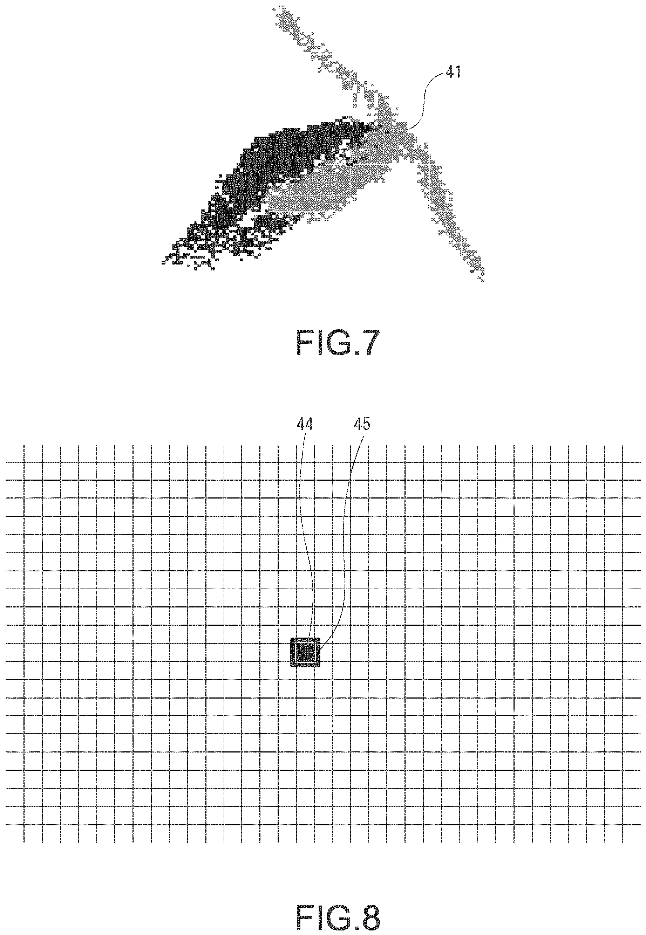

Figs. 7 to 12 are diagrams used to describe subcluster formation processing. Fig. 7 illustrates the event-point group 41 based on a single object (here, a microorganism). Further, an example of forming a subcluster for the event-point group 41 illustrated in Fig. 7 is described below.

Note that the event-point group 41 illustrated in Fig. 7 is collectively displayed events detected at different times. Further, in Figs. 8 to 12, an event 44 (an initial event 44) from which a subcluster 45 is formed is indicated in black, and the event 44 added to the subcluster 45 is hatched. Furthermore, for convenience of description, it is assumed that the event-point group 41 and a set of pixels in each of Figs. 8 to 12 have different sizes.

As illustrated in Fig. 8, when the event 44 determined by denoising to be valid has been found and when there is no subcluster that can include the found event 44, the subcluster formation section 21 generates (forms) a new subcluster 45 in which the found event 44 is to be included. Further, the subcluster formation section 21 gives a specific ID to the generated subcluster 45. The subcluster 45 generated at this point only includes one event 44.

Thereafter, when a valid event 44 is newly detected, the subcluster formation section 21 determines whether the detected event 44 satisfies a specified condition for being included in the formed subcluster 45.

The following is an example of the specified condition: longitudinal and transverse dimensions (vertical and horizontal dimensions) of the subcluster 45 are smaller than or equal to maximum dimensions (for example, 20 pixels × 20 pixels) and the number of events included in the subcluster 45 is smaller than or equal to a maximum number (for example, ten thousand event points).

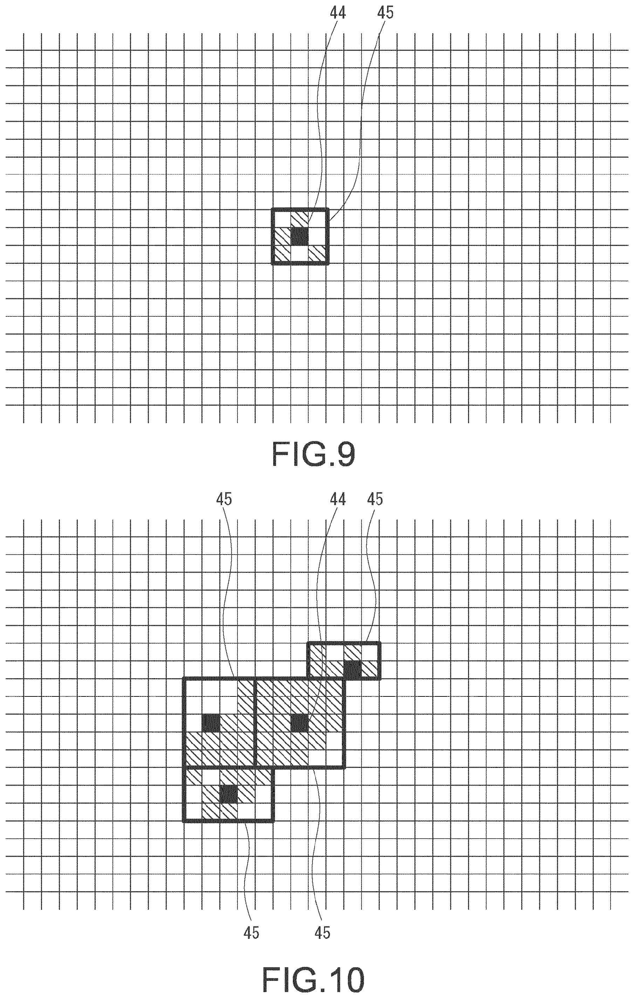

When it has been determined that the specified condition is satisfied, the subcluster formation section 21 adds the event 44 (hatched in Fig. 9) to the subcluster 45 for which the specified condition is satisfied, as illustrated in the figure. Note that, when the event 44 satisfies specified conditions for a plurality of subcluster 45, the subcluster formation section 21 selects a specific one of the plurality of subclusters 45 for which the specified conditions are satisfied, and adds the event 44 to the selected subcluster 45. Here, various methods for selecting the subcluster 45 are conceivable. For example, the subcluster formation section 21 may preferentially select the subcluster 45 generated first or latest. Further, the subcluster formation section 21 may preferentially select the subcluster 45 including a largest number of events.

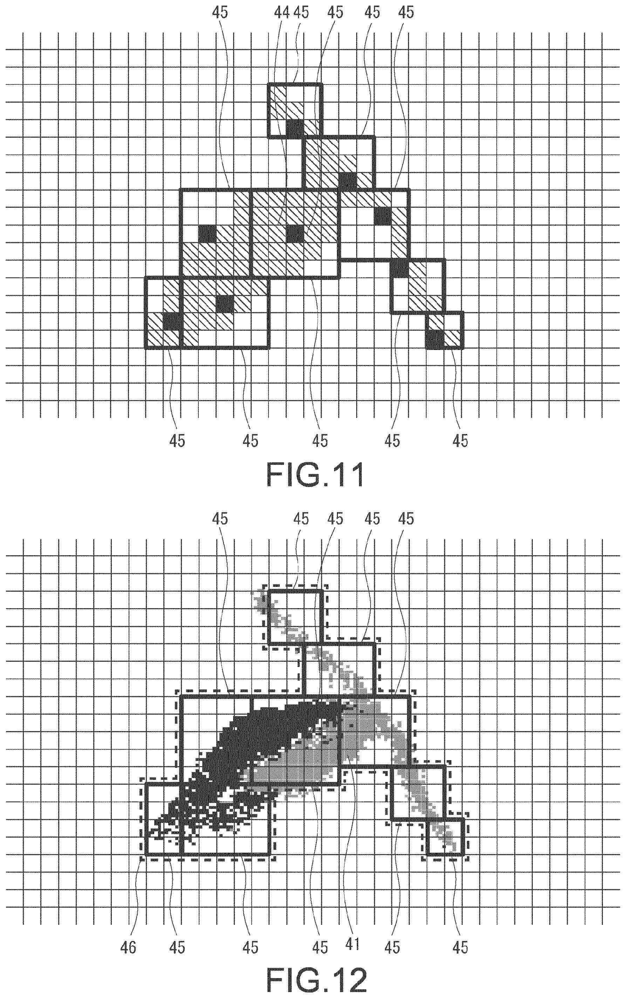

On the other hand, when the event 44 does not satisfy specified conditions for any subclusters 45, the subcluster formation section 21 generates (forms) a new subcluster 45 in which that event 44 is to be included, as illustrated in Figs. 10 and 11.

As described above, every time a valid event 44 is detected, the subcluster formation section 21 determines whether the detected valid event 44 satisfies a specified condition for being included in an existing subcluster 45. The detected valid event 44 is added to the subcluster 45 when the specified condition is satisfied, and a new subcluster 45 is formed when the specified condition is not satisfied.

Thus, a plurality of subclusters 45 may be formed for a single object (the event-point group 41). Further, the subclusters 45 may overlap each other (may include the same set of coordinates).

Furthermore, when an object is moving, the subclusters 45 related to the object is formed while moving.

Here, a plurality of subclusters 45 formed using a single object and the event-point group 41 are compared in an overlapping state, as illustrated in Fig. 12. A shape formed using a plurality of subclusters 45 formed using the event-point group 41 is almost identical to the shape of the event-point group 41 (the object). Thus, a feature of the object can be roughly understood from the plurality of subclusters 45.

### [3.3. Data Generation Processing]

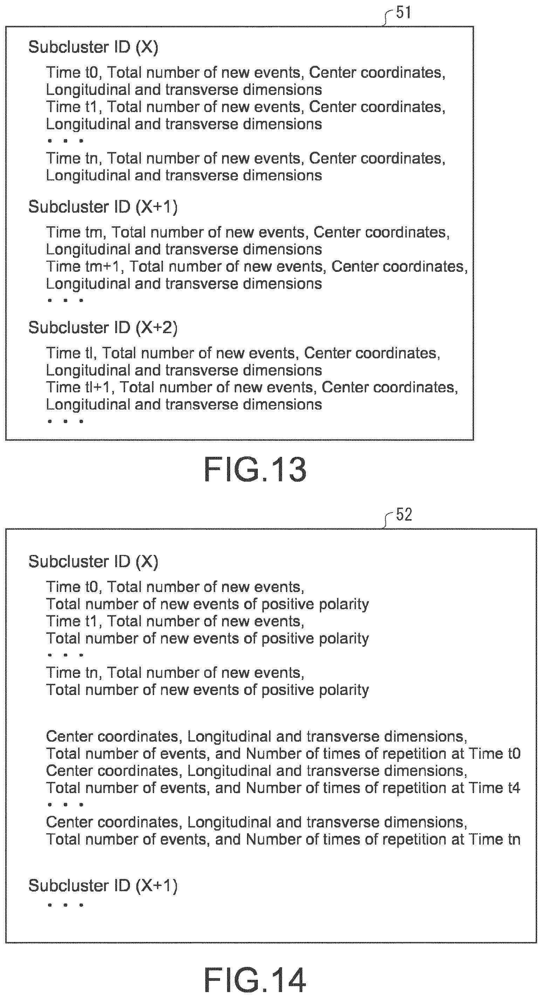

Next, data generation processing performed to generate and record subcluster data. Figs. 13 and 14 are diagrams used to describe examples of data structures of subclusters. Note that X, n, m, and l in Figs. 13 and 14 represent integers.

When all of the event signals are recorded for each single object, the data amount may become huge, as described above. Thus, in the present embodiment, an event signal itself is not recorded, but data is compressed into information indicating the subcluster 45 and the obtained information is recorded, the information being usable upon processing performed later (analysis processing performed by the analysis apparatus 3).

When the subcluster 45 is formed, the data generator 22 calculates, for each specified period of time (such as for each period of one millisecond), the total number of events newly added (the total number of new events), center coordinates of the subcluster 45, and longitudinal and transverse dimensions of the subcluster 45 (the number of pixels in the subcluster 45 in the vertical direction and in the horizontal direction) with respect to all of the generated subclusters, as illustrated in, for example, Fig. 13.

Then, the data generator 22 associates a current time, the calculated total number of new events, the calculated center coordinates, and the calculated longitudinal and transverse dimensions with an ID of the subcluster 45 to generate subcluster data 51.

The generated subcluster data 51 is recorded by the controller 16 in the memory 17. Thus, the controller 16 serves as a data recording section that records the subcluster data 51 in the memory 17.

Further, in another example illustrated in Fig. 14, the data generator 22 calculates, for each specified period of time (such as for each period of one millisecond), the total number of new events and the total number of positive events from among newly added events (the total number of new events of positive polarity). Then, the data generator 22 associates a current time, the calculated total number of new events, and the calculated total number of new events of positive polarity with an ID of the subcluster to generate subcluster data 52.

Furthermore, the data generator 22 calculates, for each period of time longer than the specified period of time (such as for each period of four milliseconds), center coordinates of the subcluster 45, longitudinal and transverse dimensions of the subcluster 45, the total number of events, and the number of times of repetition, and the data generator 22 associates the calculated center coordinates, the calculated longitudinal and transverse dimensions, the calculated total number of events, and the calculated number of times of repetition with an ID of the subcluster to generate the subcluster data 52.

In the other example illustrated in Fig. 14, the total number of new events and the like for which a high temporal resolution is necessary are calculated for each specified period of time and recorded, whereas the center coordinates, longitudinal and transverse dimensions, and total number of events for which a high temporal resolution is not necessary are calculated for each period of time longer than the specified period of time and recorded. This makes it possible to maintain the necessary amount of information and to further reduce the data amount.

As described above, in the data compression processing, only information regarding the subcluster 45 that is necessary for processing performed later is recorded. This makes it possible to reduce (compress) the data amount, compared to when all of the event signals of events detected by the vision sensor 13 are recorded.

### [3.4. Flow of Data Compression Processing]

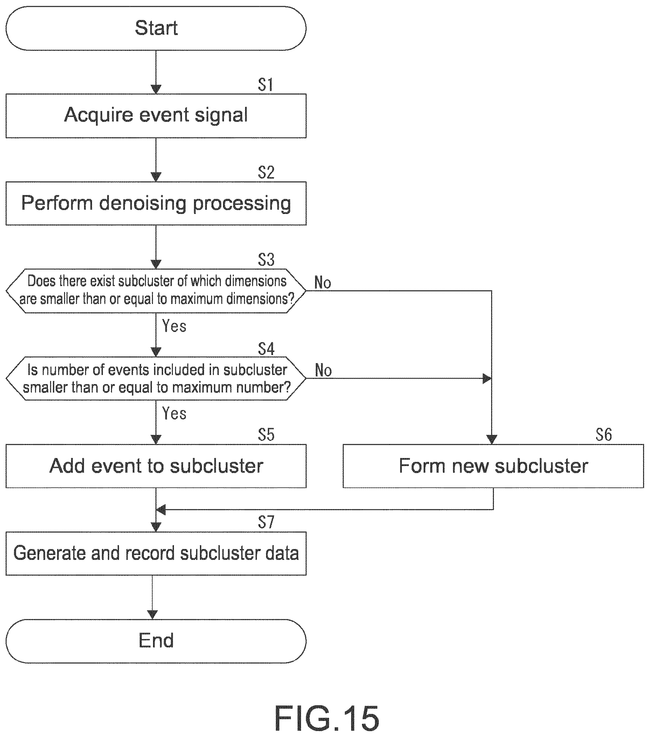

Fig. 15 is a flowchart indicating a flow of the data compression processing. In Step S1, the subcluster formation section 21 acquires an event signal from the vision sensor 13, as illustrated in Fig. 15. In Step S2, the subcluster formation section 21 performs denoising processing on events based on the acquired event signals to only extract a valid event.

In Step S3, the subcluster formation section 21 determines whether the event extracted in Step S2 is in a range in which longitudinal and transverse dimensions of an existing subcluster 45 are smaller than or equal to maximum dimensions.

When it has been determined, as a result, that the event is in the range in which the longitudinal and transverse dimensions of the existing subcluster 45 are smaller than or equal to the maximum dimensions (Yes in Step S3), the subcluster formation section 21 determines, in Step S4, whether the number of events included in the subcluster 45 is smaller than or equal to a maximum number in the case in which the event is added to the subcluster 45. When it has been determined, as a result, that the number of events included in the subcluster 45 is smaller than or equal to the maximum number (Yes in Step S4), the subcluster formation section 21 adds the event to the subcluster 45 in Step S5.

In other words, it is determined, in Steps S3 and S4, whether the event extracted in Step S2 satisfies a specified condition for being included in the existing subcluster 45.

On the other hand, when it has been determined that the event is not in the range in which the longitudinal and transverse dimensions of the existing subcluster 45 are smaller than or equal to the maximum dimensions (No in Step S3) and when it has been determined that the number of events included in the subcluster 45 is not smaller than or equal to the maximum number (No in Step S4), the subcluster formation section 21 forms a new subcluster 45 and adds the event to the new subcluster 45 in Step S6.

In Step S7, the data generator 22 calculates to generate subcluster data for the subcluster 45. Then, the data generator 22 records the generated subcluster data in the memory 17 through the controller 16.

### <4. Configuration of Analysis Apparatus 3>

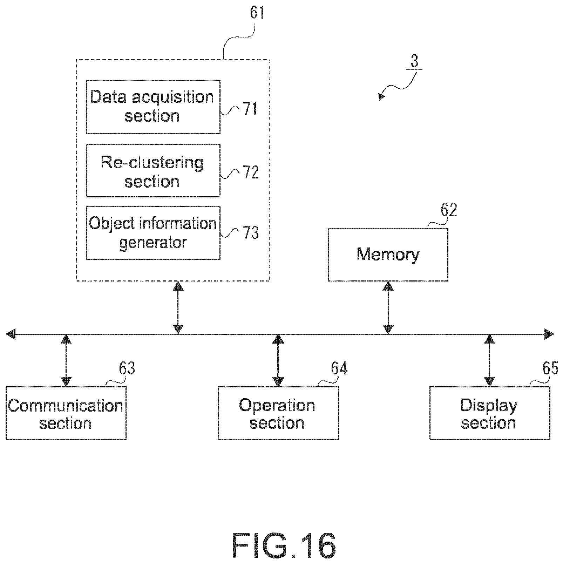

Fig. 16 is a diagram used to describe a configuration of the analysis apparatus 3. As illustrated in Fig. 16, the analysis apparatus 3 includes a controller 61, a memory 62, a communication section 63, an operation section 64, and a display section 65.

The controller 61 includes, for example, a microcomputer that includes a CPU, a ROM, and a RAM, and performs an overall control on the analysis apparatus 3.

In the present embodiment, the controller 61 includes a data acquisition section 71, a re-clustering section 72, and an object information generator 73.

The data acquisition section 71 acquires subcluster data generated to be recorded by the image-capturing apparatus 2. For example, the data acquisition section 71 may acquire subcluster data from the image-capturing apparatus 2 through the communication section 63, or may acquire the subcluster data from the memory 62 when the memory 17 (a recording medium) of the image-capturing apparatus 2 is mounted as the memory 62.

On the basis of pieces of subcluster data, the re-clustering section 72 associates a certain subcluster included in a plurality of subclusters with another subcluster included in the plurality of subclusters to form a cluster.

The object information generator 73 calculates information regarding an object represented by a cluster on the basis of pieces of subcluster data of subclusters, each piece of subcluster data being associated with the cluster.

Note that the re-clustering section 72 and the object information generator 73 will be described in detail later.

The memory 62 is a storage medium such as a nonvolatile memory. The memory 62 may be removable from the analysis apparatus 3.

The communication section 63 performs data communication with an external apparatus wirelessly or by wire.

The operation section 64 receives an input operation performed by a user, and outputs, to the controller 61, a signal dependent on the input operation performed by the user.

The display section 65 is a liquid crystal display (LCD) or an organic electroluminescence (EL) display, and displays thereon various images.

### <5. Analysis Processing>

Next, the analysis processing performed by the controller 61 is described. The analysis processing includes re-clustering processing, feature amount calculating processing, and cluster classification processing that are described below.

### [5.1. Re-clustering Processing]

When the data acquisition section 71 acquires pieces of subcluster data, the re-clustering section 72 connects (associates) a certain subcluster 45 with another subcluster 45 on the basis of the pieces of acquired subcluster data to form a cluster 46 (refer to Fig. 12), the certain subcluster 45 and other subcluster being the subclusters 45 based on a single object.

Specifically, when a distance between a position of center coordinates of a certain subcluster 45 and a position of center coordinates of another subcluster 45 is in a range of a specified distance and when a difference between a time at which the certain subcluster 45 is formed and a time at which the other subcluster 45 is formed is in a range of a specified period of time, the certain subcluster 45 and the other subcluster 45 are associated with each other by the re-clustering section 72 as the subclusters 45 detected in a single object.

Note that the range of a specified distance refers to a range of a distance between the subclusters 45, where the subclusters 45 situated at the distance from each other are determined to be based on a single object. Further, the range of a specified period of time is a range of a period of time, where the subclusters 45 formed for the period of time are determined to be based on the single object.

Thus, the cluster 46 formed by the subclusters 45 being associated with each other includes information regarding a shape of an object, as also illustrated in Fig. 12.

Further, when an object moves over time, the subclusters 45 at different positions are associated with each other over time. Thus, the cluster 46 includes information regarding, for example, a direction of and a speed of movement of the object.

As described above, the cluster 46 formed by the subclusters 45 being associated with each other includes information regarding an object represented by the cluster 46.

### [5.2. Feature Amount Calculating Processing]

The object information generator 73 calculates a feature amount of the cluster 46 obtained by re-clustering performed by the re-clustering section 72. Examples of the feature amount include a movement-related feature amount, a frequency-related feature amount, an event-related feature amount, and a shape-related feature amount.

Examples of the movement-related feature amount include an average speed of the cluster 46, a body length of the cluster 46, a body width of the cluster 46, how frequently an angle of the cluster 46 is changed, a ratio of the body length at the average speed, a ratio of the body length at the maximum instantaneous speed, the persistence of a change in direction, the presence or absence of taxis, whether the taxis is positive or negative, how frequently a stop is made, a degree of movement in the vertical direction, a degree of movement in the horizontal direction, the persistence of uniform velocity, a width of an arc of rotation, a cycle of spiral movement, a velocity dispersion, and the maximum instantaneous acceleration. Note that examples of the taxis include phototaxis, thermotaxis, chemotaxis, thigmotaxis, barotaxis, and galvanotaxis.

Examples of the frequency-related feature amount include a frequency at which there is an increase or reduction (a change) in the number of events, and a frequency at which there is an increase or reduction in a change in size.

Examples of the event-related feature amount include a ratio between a positive event and a negative event, and a speed at which the number of events is increased.

Examples of the shape-related feature amount include a longitudinal-and-transverse scale ratio, and a range of a change in longitudinal-and-transverse scale ratio.

Note that these are merely examples of the feature amount, and other feature amounts may be adopted.

As described above, various feature amounts of the cluster 46 could be conceivable. In the present embodiment, the object information generator 73 calculates feature amounts of the cluster 46 that are classified into the movement-related feature amount, the frequency-related feature amount, the event-related feature amount, and the shape-related feature amount. Here, an example in which three feature amounts that are the average speed of the cluster 46, the body length of the cluster 46, and how frequently the angle of the cluster 46 is changed are calculated is described.

The object information generator 73 calculates center coordinates of the cluster 46 for each time on the basis of center coordinates and longitudinal and transverse dimensions of the subclusters 45 for each time, each of the subclusters 45 being associated with the cluster 46.

Then, the object information generator 73 tracks the center coordinates of the cluster 46 to calculate a distance of movement of the cluster 46, and divides the calculated movement distance by the time taken for the movement to calculate an average speed.

Further, the object information generator 73 calculates longitudinal and transverse dimensions of the cluster 46 for each time on the basis of the center coordinates and the longitudinal and transverse dimensions of the subclusters 45 for each time, each of the subclusters 45 being associated with the cluster 46.

Then, the object information generator 73 averages the longitudinal dimensions for the respective times and the transverse dimensions for the respective times, and sets, to be a body length, one of a calculated horizonal length and a calculated vertical length that is longer than another of the calculated horizonal length and vertical length.

Further, as in the case of calculating the average speed, the object information generator 73 tracks the center coordinates of the cluster 46 to calculate a heading vector of the cluster 46 for each time. Thereafter, the object information generator 73 calculates an inner product of unit lengths of a heading vector and a temporally next heading vector, that is, an angle formed by the heading vector and the temporally next heading vector.

Then, the object information generator 73 counts the number of times that the angle formed by the heading vector and the temporally next heading vector is in a range of a specified angle, and sets a value of the counting to be a degree corresponding to how frequently the angle is changed. Note that the specified angle is set to be an angle at which there is a change in the direction of an object.

### [5.3. Cluster Classification Processing]

When the feature amount of the cluster 46 is calculated, the object information generator 73 specifies the type of the cluster 46, that is, the type of object on the basis of the calculated feature amount. Here, the type of object may be specified on the basis of rules, or may be specified by machine learning.

For example, when the type of object is specified on the basis of rules, a range of a feature amount is set for each specified type, and such information is stored in a ROM or the memory 62. Then, when the feature amount of the cluster 46 is in a range of a feature amount of a specific type, the object information generator 73 specifies the cluster 46 as the cluster 46 of the specific type.

Further, when the type of object is specified by machine learning, a learning model is generated that has learned, as training data, a known relationship between a feature amount and the type for each type, and the learning model is stored in a ROM or the memory 62. Then, the object information generator 73 inputs the feature amount of the cluster 46 to the learning model to specify the type of cluster 46.

Note that different values may be obtained for a calculated feature amount (such as a body length and a body width) of a certain type according to a transformation period of time or a process of growth. Thus, the object information generator 73 comprehensively specifies the type using various feature amounts.

Further, the object information generator 73 may add the numbers of clusters 46 for each specified type to calculate the number of clusters 46 for each type.

### [5.4. Flow of Analysis Processing]

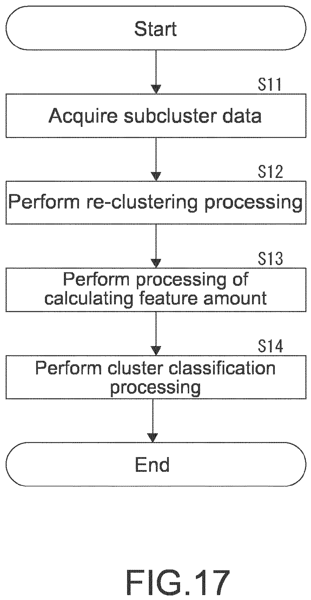

Fig. 17 is a flowchart indicating a flow of the analysis processing. As illustrated in Fig. 17, the subcluster-data acquisition section 71 acquires pieces of subcluster data from the image-capturing apparatus 2 in Step S11. In Step S12, the re-clustering section 72 performs the re-clustering processing of associating a certain subcluster 45 with another subcluster 45 on the basis of the pieces of acquired subcluster data to form the cluster 46, the certain subcluster 45 and other subcluster 45 being the subclusters 45 based on a single object.

In Step S13, the object information generator 73 performs the feature amount calculating processing of calculating a feature amount of the cluster 46 obtained by the re-clustering. In Step S14, the object information generator 73 performs the cluster classification processing of specifying the type of cluster 46 on the basis of the calculated feature amount.

### <6. Other Examples of Configuration of Data Generation System>

Note that the embodiments are not limited to the specific examples described above, and various modifications may be made thereto.

For example, the image-capturing apparatus 2 may include an imaging sensor. The imaging sensor is an image sensor of, for example, a charge-coupled-device (CCD) type or a complementary-metal-oxide-semiconductor (CMOS) type, and may perform imaging in the same imaging range as the vision sensor 13.

Further, in the embodiments, the subcluster formation section 21 and the data generator 22 are provided to the image-capturing apparatus 2, and the subcluster-data acquisition section 71, the re-clustering section 72, and the object information generator 73 are provided to the analysis apparatus 3.

However, these functional sections may be provided to a single apparatus or may be separately provided to at least three apparatuses.

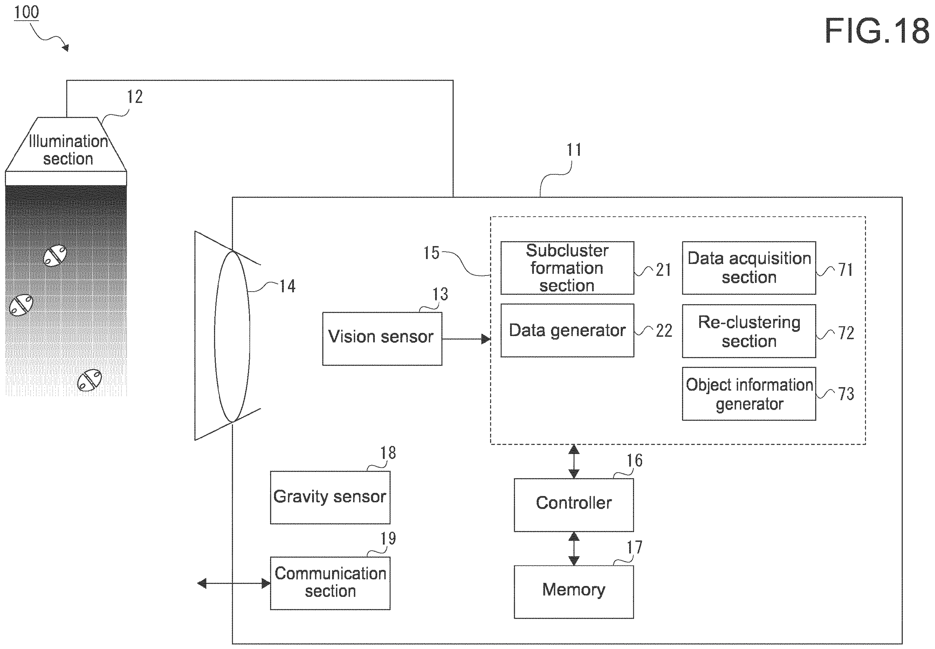

For example, the signal analyzer 15 of the image-capturing apparatus 100 including the vision sensor 13 may serve as the subcluster formation section 21, the data generator 22, the subcluster-data acquisition section 71, the re-clustering section 72, and the object information generator 73, as illustrated in Fig. 18. Note that, when all of the functional sections are provided to a single apparatus, the subcluster-data acquisition section 71 can be omitted.

Further, the image-capturing apparatus may include the vision sensor 13, and the analysis apparatus 3 may include the subcluster formation section 21 and the data generator 22. Furthermore, the image-capturing apparatus and the analysis apparatus 3 may be respectively provided to different apparatuses (computers).

Further, in the embodiments, the following is the specified condition used to determine whether a newly detected event 44 is included in the subcluster 45: longitudinal and transverse dimensions of the subcluster 45 are smaller than or equal to maximum dimensions and the number of events included in the subcluster 45 is smaller than or equal to a maximum number.

However, any other conditions may be adopted as the specified condition. For example, the specified condition includes a condition that the newly detected event 44 be detected within a specified period of time after the time of detection of a first added event.

The maximum dimensions of longitudinal and transverse dimensions may be changed dynamically according to a state of the subcluster 45 or a state of, for example, the re-clustering section 72. As a specific example, when events included in the subcluster 45 exhibit a high uniformity and when the proportion of a positive event or a negative event is greater than or equal to a preset threshold, the setting of larger maximum dimensions makes it possible to increase a rate of compressing a data amount. As another specific example, when a large number of subclusters 45 are generated and when processing burdens imposed on the re-clustering section 72 exhibit a value greater than or equal to a preset threshold, the setting of larger maximum dimensions makes it possible to reduce the number of subclusters 45 generated and to reduce the processing burdens imposed on the re-clustering section 72.

Further, in the embodiments, a time, the total number of new events, center coordinates, longitudinal and transverse dimensions, and the like are included as subcluster data. However, other information may be included that is necessary for the analysis processing and makes it possible to further compress the data amount, compared to when an event signal is recorded. One of the pieces of information described in the embodiments does not necessarily have to be included.

### <7. Summary of Embodiments>

As described above, the data generation apparatus (the image-capturing apparatus 2) according to the embodiments includes the subcluster formation section 21 forming a subcluster by classifying, according to a specified condition, events detected by the vision sensor 13 including two-dimensionally arranged pixels, the events occurring according to a change in the intensity of incident light to be asynchronously detected in the respective pixels; and the data generator 22 generating information (subcluster data) regarding the subcluster on the basis of pieces of information regarding the events classified into the subcluster.

This results in there being no need for the data generation apparatus to record all of the event signals of events detected by the vision sensor 13, and in being able to only record information regarding the subcluster 45.

On the other hand, the information regarding the subcluster 45 includes compressed information regarding events classified into the subcluster. This makes it possible to calculate information regarding an object upon the analysis processing performed later, as in the case in which all of the event signals are recorded.

Thus, the data generation apparatus makes it possible to reduce a data capacity of recording-target data without greatly reducing an amount of information regarding an object.

Further, maximum dimensions of the subcluster 45 are determined in advance, and the subcluster formation section 21 classifies the events such that the subcluster 45 has dimensions smaller than or equal to the maximum dimensions.

Consequently, the data generation apparatus enables events respectively detected in different objects spatially separate from each other to be less likely to be classified into the same subcluster 45.

Thus, the data generation apparatus can maintain the data accuracy in subcluster data.

Furthermore, a maximum number of the events to be classified into the subcluster 45 is determined in advance, and the subcluster formation section 21 classifies the events such that the number of the events to be classified into the subcluster 45 is smaller than or equal to the maximum number.

Consequently, the data generation apparatus enables events respectively detected in different objects spatially close to each other but temporally separate from each other to be less likely to be classified into the same subcluster 45.

Thus, the data generation apparatus can maintain the data accuracy in subcluster data.

Moreover, maximum dimensions of the subcluster 45 and a maximum number of the events to be classified into the subcluster 45 are determined in advance. The subcluster formation section 21 classifies the events such that the subcluster 45 has dimensions smaller than or equal to the maximum dimensions and such that the number of the events to be classified into the subcluster 45 is smaller than or equal to the maximum number.

Consequently, the data generation apparatus enables events respectively detected in different objects spatially and temporally separate from each other to be less likely to be classified into the same subcluster 45.

Thus, the data generation apparatus can more successfully maintain the data accuracy in subcluster data.

Further, the data generator 22 generates the information regarding the subcluster 45 for each specified period of time.

Thus, the data generator 22 calculates the information regarding the subcluster 45 on the basis of event signals of events classified into the subcluster 45 for each specified period of time.

Consequently, the data generation apparatus can generate subcluster data that maintains the temporal resolution of an event that is detected at a high speed.

Furthermore, the data generator 22 calculates, as the information regarding the subcluster 45 (subcluster data), the number of the events classified into the subcluster **45.**

Consequently, the data generation apparatus knows, for example, movement of an object on the basis of a change in the number of events.

Moreover, the data generator 22 calculates center coordinates of the subcluster 45 as the information regarding the subcluster **45.**

Consequently, the data generation apparatus can obtain compressed information regarding a shape and a position of an object represented by the subcluster **45.**

Further, the data generator 22 calculates longitudinal and transverse dimensions of the subcluster as the information regarding the subcluster **45.**

Consequently, the data generation apparatus can obtain compressed information regarding a shape and a position of an object represented by the subcluster 45.

Furthermore, the data generator 22 calculates, for each specified period of time, information regarding the number of the events classified into the subcluster 45, and calculates information other than the information regarding the number of events for each period of time longer than the specified period of time.

Consequently, the number of events for which a high temporal resolution is necessary is calculated for a shorter period of time, whereas other information for which a high temporal resolution is not necessary is acquired for a longer period of time. This makes it possible to further reduce the data amount while maintaining the data accuracy.

Further, the data generation apparatus includes the re-clustering section 72 associating a certain subcluster 45 included in a plurality of the subclusters 45 with another subcluster 45 included in the plurality of the subclusters 45 on the basis of the pieces of information regarding the associated subclusters 45 to generate the cluster 46.

This enables the data generation apparatus to associate the certain subcluster 45 with the other subcluster 45, the certain subcluster 45 and other subcluster 45 being the subclusters 45 based on a single object, and to calculate (specify), for example, a feature amount of and the type of the object.

Furthermore, the data generation apparatus includes the object information generator generating information regarding an object represented by the cluster 46, on the basis of the pieces of information regarding the subclusters 45 associated with the cluster 46.

This enables the data generation apparatus to calculate (specify), for example, a feature amount of and the type of an object represented by the cluster 46.

Further, a data generation method according to the embodiments includes generating, by the data generation apparatus, a subcluster by classifying, according to a specified condition, events detected by the vision sensor 13 including two-dimensionally arranged pixels, the events occurring according to a change in the intensity of incident light to be asynchronously detected in the respective pixels; and generating, by the data generation apparatus, information regarding the subcluster on the basis of pieces of information regarding the events classified into the subcluster, as described above.

Furthermore, a program according to the embodiments causes a process to be performed, the process including generating a subcluster by classifying, according to a specified condition, events detected by the vision sensor 13 including two-dimensionally arranged pixels, the events occurring according to a change in the intensity of incident light to be asynchronously detected in the respective pixels; and generating information regarding the subcluster on the basis of pieces of information regarding the events classified into the subcluster, as described above.

Such a program can be recorded in advance in, for example, a built-in HDD that is included, as a recording medium, in equipment such as a computer apparatus, or a ROM in a microcomputer that includes a CPU.

Alternatively, the program can be temporarily or permanently stored (recorded) in a removable recording medium such as a flexible disk, a compact disc read-only memory (CD-ROM), a magneto optical (MO) disk, a digital versatile disc (DVD), the Blu-ray Disc (registered trademark), a magnetic disk, a semiconductor memory, or a memory card. Such a removable recording medium can be provided as so-called package software.

Further, such a program can be installed on, for example, a personal computer from a removable recording medium, or can be downloaded from a download site through a network such as a local area network (LAN) or the Internet.

Further, as described above, the analysis apparatus 3 according to the embodiments includes the subcluster-data acquisition section 71 acquiring information (subcluster data) regarding the subcluster 45 formed by classifying, according to a specified condition, events detected by the vision sensor 13 including two-dimensionally arranged pixels, the events occurring on the basis of the intensity of incident light to be asynchronously detected in the respective pixels; and the object information generator 73 generating information regarding an object on the basis of the information regarding the subcluster **45.**

This enables the analysis apparatus 3 to calculate (specify) information regarding an object represented by the subcluster 45 on the basis of subcluster data of which a data amount has been compressed.

Note that the effects described herein are not limitative but are merely illustrative, and other effects may be provided.

### <8. Present Technology>

The present technology may also take the following configurations.
(1) A data generation apparatus, including:
   a subcluster formation section that forms a subcluster by classifying, according to a specified condition, events detected by a vision sensor including two-dimensionally arranged pixels, the events occurring on the basis of an intensity of incident light to be asynchronously detected in the respective pixels; and
   a data generator that generates information regarding the subcluster on the basis of pieces of information regarding the events classified into the subcluster.
(2) The data generation apparatus according to (1), in which
   maximum dimensions of the subcluster are determined in advance, and
   the subcluster formation section classifies the events such that the subcluster has dimensions smaller than or equal to the maximum dimensions.
(3) The data generation apparatus according to (1) or (2), in which
   a maximum number of the events to be classified into the subcluster is determined in advance, and
   the subcluster formation section classifies the events such that the number of the events to be classified into the subcluster is smaller than or equal to the maximum number.
(4) The data generation apparatus according to any one of (1) to (3), in which
   maximum dimensions of the subcluster and a maximum number of the events to be classified into the subcluster are determined in advance, and
   the subcluster formation section classifies the events such that the subcluster has dimensions smaller than or equal to the maximum dimensions and such that the number of the events to be classified into the subcluster is smaller than or equal to the maximum number.
(5) The data generation apparatus according to any one of (1) to (4), in which
   the data generator generates the information regarding the subcluster for each specified period of time.
(6) The data generation apparatus according to any one of (1) to (5), in which
   the data generator calculates, as the information regarding the subcluster, the number of the events classified into the subcluster.
(7) The data generation apparatus according to any one of (1) to (6), in which
   the data generator calculates a center position of the subcluster as the information regarding the subcluster.
(8) The data generation apparatus according to any one of (1) to (7), in which
   the data generator calculates dimensions of the subcluster as the information regarding the subcluster.
(9) The data generation apparatus according to any one of (1) to (8), in which
   the data generator
   calculates, for each specified period of time, information regarding the number of the events classified into the subcluster, and
   calculates information other than the information regarding the number of the events for each period of time longer than the specified period of time.
(10) The data generation apparatus according to any one of (1) to (9), further including
   a re-clustering section that associates a certain subcluster included in a plurality of the subclusters with another subcluster included in the plurality of the subclusters on the basis of the pieces of information regarding the associated subclusters to form a cluster.
(11) The data generation apparatus according to (10), further including
   an object information generator that generates information regarding an object represented by the cluster, on the basis of the pieces of information regarding the associated subclusters associated with the cluster.
(12) A data generation method, including:
   generating, by a data generation apparatus, a subcluster by classifying, according to a specified condition, events detected by a vision sensor including two-dimensionally arranged pixels, the events occurring according to a change in an intensity of incident light to be asynchronously detected in the respective pixels; and
   generating, by the data generation apparatus, information regarding the subcluster on the basis of pieces of information regarding the events classified into the subcluster.
(13) A program that causes a data generation apparatus to perform a process including:
   generating a subcluster by classifying, according to a specified condition, events detected by a vision sensor including two-dimensionally arranged pixels, the events occurring according to a change in an intensity of incident light to be asynchronously detected in the respective pixels; and
   generating information regarding the subcluster on the basis of pieces of information regarding the events classified into the subcluster.
(14) An analysis apparatus, including:
   a subcluster-data acquisition section that acquires information regarding a subcluster formed by classifying, according to a specified condition, events detected by a vision sensor including two-dimensionally arranged pixels, the events occurring on the basis of an intensity of incident light to be asynchronously detected in the respective pixels; and
   an object information generator that generates information regarding an object on the basis of the information regarding the subcluster.
(15) The analysis apparatus according to (14), further including
   a re-clustering section that associates a certain subcluster included in a plurality of the subclusters with another subcluster included in the plurality of the subclusters on the basis of the pieces of information regarding the associated subclusters to generate a cluster, in which
   the object information generator generates information regarding an object represented by the cluster, on the basis of the pieces of information regarding the associated subclusters, each piece of information regarding the associated subcluster being associated with the cluster.

### Reference Signs List

- 1: measurement system
- 2: data generation apparatus
- 3: analysis apparatus
- 13: vision sensor
- 15: signal analyzer
- 21: subcluster formation section
- 22: information generator
- 61: controller
- 71: subcluster-data acquisition section
- 72: re-clustering section
- 73: object information generator

## Claims

1. A data generation apparatus, comprising:
a subcluster formation section that forms a subcluster by classifying, according to a specified condition, events detected by a vision sensor including two-dimensionally arranged pixels, the events occurring on a basis of an intensity of incident light to be asynchronously detected in the respective pixels; and
a data generator that generates information regarding the subcluster on a basis of pieces of information regarding the events classified into the subcluster.

2. The data generation apparatus according to claim 1, wherein
maximum dimensions of the subcluster are determined in advance, and
the subcluster formation section classifies the events such that the subcluster has dimensions smaller than or equal to the maximum dimensions.

3. The data generation apparatus according to claim 1, wherein
a maximum number of the events to be classified into the subcluster is determined in advance, and
the subcluster formation section classifies the events such that the number of the events to be classified into the subcluster is smaller than or equal to the maximum number.

4. The data generation apparatus according to claim 1, wherein
maximum dimensions of the subcluster and a maximum number of the events to be classified into the subcluster are determined in advance, and
the subcluster formation section classifies the events such that the subcluster has dimensions smaller than or equal to the maximum dimensions and such that the number of the events to be classified into the subcluster is smaller than or equal to the maximum number.

5. The data generation apparatus according to claim 1, wherein
the data generator generates the information regarding the subcluster for each specified period of time.

6. The data generation apparatus according to claim 1, wherein
the data generator calculates, as the information regarding the subcluster, the number of the events classified into the subcluster.

7. The data generation apparatus according to claim 1, wherein
the data generator calculates a center position of the subcluster as the information regarding the subcluster.

8. The data generation apparatus according to claim **1,** wherein
the data generator calculates dimensions of the subcluster as the information regarding the subcluster.

9. The data generation apparatus according to claim **1,** wherein
the data generator
calculates, for each specified period of time, information regarding the number of the events classified into the subcluster, and
calculates information other than the information regarding the number of the events for each period of time longer than the specified period of time.

10. The data generation apparatus according to claim **1,** further comprising
a re-clustering section that associates a certain subcluster included in a plurality of the subclusters with another subcluster included in the plurality of the subclusters on a basis of the pieces of information regarding the associated subclusters to form a cluster.

11. The data generation apparatus according to claim 10, further comprising
an object information generator that generates information regarding an object represented by the cluster, on the basis of the pieces of information regarding the associated subclusters associated with the cluster.

12. A data generation method, comprising:
generating, by a data generation apparatus, a subcluster by classifying, according to a specified condition, events detected by a vision sensor including two-dimensionally arranged pixels, the events occurring according to a change in an intensity of incident light to be asynchronously detected in the respective pixels; and
generating, by the data generation apparatus, information regarding the subcluster on a basis of pieces of information regarding the events classified into the subcluster.

13. A program that causes a data generation apparatus to perform a process comprising:
generating a subcluster by classifying, according to a specified condition, events detected by a vision sensor including two-dimensionally arranged pixels, the events occurring according to a change in an intensity of incident light to be asynchronously detected in the respective pixels; and
generating information regarding the subcluster on a basis of pieces of information regarding the events classified into the subcluster.

14. An analysis apparatus, comprising:
a subcluster-data acquisition section that acquires information regarding a subcluster formed by classifying, according to a specified condition, events detected by a vision sensor including two-dimensionally arranged pixels, the events occurring on a basis of an intensity of incident light to be asynchronously detected in the respective pixels; and
an object information generator that generates information regarding an object on a basis of the information regarding the subcluster.

15. The analysis apparatus according to claim 14, further comprising
a re-clustering section that associates a certain subcluster included in a plurality of the subclusters with another subcluster included in the plurality of the subclusters on a basis of the pieces of information regarding the associated subclusters to generate a cluster, wherein
the object information generator generates information regarding an object represented by the cluster, on the basis of the pieces of information regarding the associated subclusters, each piece of information regarding the associated subcluster being associated with the cluster.
classified into the subcluster.
